# EUROPEAN PATENT SPECIFICATION

(11) **EP 0 422 982 B1**
(45) Date of publication and mention of the grant of the patent: **20.07.1994**
(21) Application number: 90402689.5
(22) Date of filing: 28.09.1990
(51) Int. Cl.: F16K 17/18

(54) **Two-way operating relief valve**
Zweiwegüberdruckventil
Valve de surpression bidirectionnelle

(30) Priority: 10.10.1989 ES 8903513
(43) Date of publication of application: 17.04.1991
(73) Proprietor: BENDIX ESPANA S.A., E-08080 Barcelona 6 (ES)
(72) Inventor: Guasch, Esteve Cortes, Bendix Europe Service Tech., F-93700 Drancy (FR)
(74) Representative: Bentz, Jean-Paul

(56) References cited:
- FR-A- 2 597 952
- US-A- 4 210 170
- US-A- 4 476 890

## Description

The invention relates to a two-way operating relief valve to be used to put two ducts into communication when the difference of the pressures of the fluid within the ducts is greater than a predetermined threshold.

Such a relief valve is particularly useful in a power steering hydraulic circuit for vehicles for avoiding fierce reactions on the steering wheel due to obstacles on the road to one vehicle wheel.

### BACKGROUND OF THE INVENTION

Up to now, in such circuits as disclosed for example in US-A-4 210 170, from which the features set out in the preamble of claim 1 are known, the skilled man was used to include two separate valves acting separating by according to the sign of the difference of the pressures. These may result : for instance, a lot of space is used, adjustments are required in order to avoid asymmetric operations, etc...

### DESCRIPTION OF THE INVENTION

The object of this invention is to provide a two-way operating relief valve which is of compact design, has very simple parts, and operates identically whatever is the sign of the difference of the pressures.

This object and other are achieved as set out by the features of claim 1 with a two-way operating relief valve comprising a body having a blind bore with which first and second ducts communicate, a piston constituting a valve member closing the communication between the ducts at rest, the piston being provided with a stem sliding with a bushing which is slidably arranged within the bore, an end of the bushing being able to cooperate with a thrust provided in the bore, and a part of the bushing constituting a seat for the valve member, a helicoïdal spring pushing apart the piston and the bushing so that the pressure provided via the first duct is applied to one surface of the piston and to a shoulder provided at the bushing for opening communication between the first and second duct and the pressure provided via the second duct is applied to the other surface of the piston and to an end of the bushing for opening communication between the second and first duct, on the end of the stem opposite the piston being screwed a ring between which and the shoulder of the bushing is disposed the helicoïdal spring, the thrust provided in the bore being defined by the junction of two bore portions of different diameters, the bushing sliding within one of the bore portions, the helicoïdal spring being located within the bore portion of greater diameter, characterized in that the one end of the bushing is formed by the shoulder which cooperates on its one side with the thrust and on its other side with the helicoïdal spring, the latter urges at rest the ring in abutment against the end of the blind bore, the other end of the bushing constitutes the seat for the valve member and the bushing slides within the bore portion of smaller diameter.

### BRIEF DESCRIPTION OF THE DRAWINGS

Other features and characteristics will appear hereafter in the description of one preferred embodiment of the invention given in a non-limitative way, and in the appended claims.
Figure 1 is a cross-section view of a two-way operating relief valve according to the invention in rest position ;
Figure 2 is the same view of the valve of Figure 1 acting in one way, and
Figure 3 is the same view of the valve of Figure 1, but acting in the other way.

### DESCRIPTION OF PREFERRED EMBODIMENT

The invention will now be described with reference to the Figures.

On these Figures, the illustrated relief valve comprises a body 11, here made in two parts for easy assemblying. A blind bore 9 is provided in this body. In the illustrated example, this bore is provided by a sleeve 12 inserted into a bore provided in the body. This sleeve is unnecessary for the invention and is just a practical feature.

Two ducts 5, 7 communicate with the bore 9. A piston 21 is provided with a stem 18 which slides into a bushing 16. This bushing 16 has one end in form of a shoulder 13 able to cooperate with a thrust 14 provided here as a step within the bore 9 and defining two bore portions of different diameters, the bushing 16 sliding into the portion of smaller diameter. The other end of the bushing 16 constitutes a seat for the piston 21 which is a valve member.

A ring 15 is screwed on the end of the stem 18 in order to provide an adjustment means together with a screw-head 24 provided on the other face of the piston 21. Obviously, this ring 15 is not allowed to rotate within the bore 9.

A helicoidal spring 17 is located between the ring 15 and the shoulder 13, i.e. within the portion of the bore of greater diameter, in order to push apart the bushing 16 and the piston 21.

The duct 5 opens in a chamber 30 provided in the bore 9 between the shoulder 13 and the ring 15. This chamber 30 communicates with one surface of the piston 21 via a flat portion 19 of the stem 18. The other duct 7 communicates with the other surface of the piston 21 and with the end of the bushing forming seat for the piston 21.

This two-way operating relief valve acts as follows.

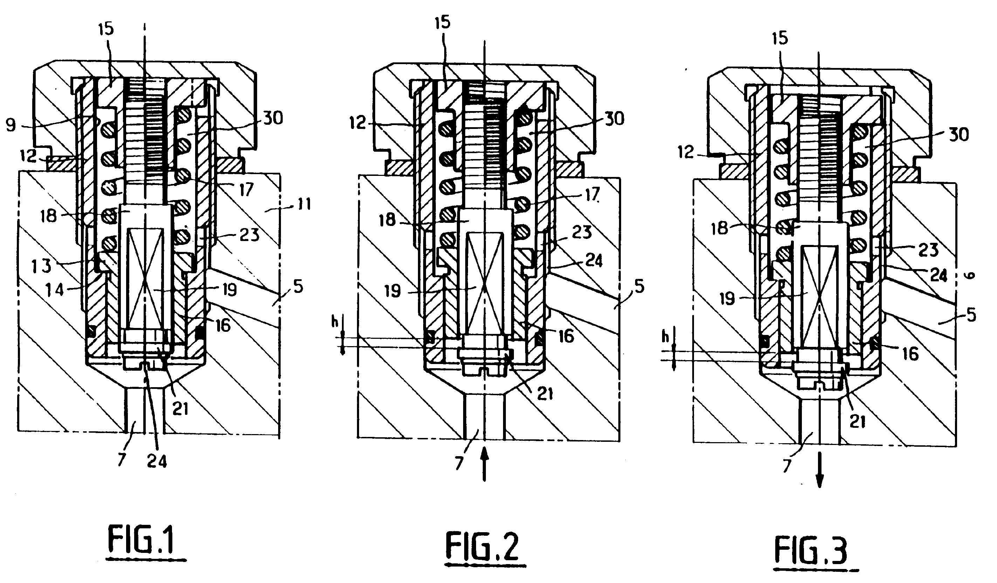

At rest, as illustrated Figure 1, the difference of the pressures of the fluid within the two ducts 5 and 7, is smaller than a predetermined threshold defined by the precompression of the spring 17. Consequently, the ring 15 abuts against the end of the bore and the bushing shoulder 13 abuts against the thrust 14. In this position, the valve member, i.e. the piston 21 rests on its seat, i.e. the end of the bushing 16. This results in a closed valve, no communication existing between the two ducts since the difference of the fluid pressures on the two surfaces of the piston 21 and on the two ends of the bushing 16 does not allow any part of the valve to move against the spring force.

Now if the pressure of the fluid within duct 7 is higher than the pressure of the fluid within duct 5, as illustrated Figure 2, the stem 18 still abuts against the end of the bore. The pressures are then applied to each end of the bushing 16 which is allowed to slide upwardly (in the Figure) against the spring force. This results is an opening of the valve, and the two ducts 5 and 7 communicate in order to go back to the rest position after that a flow of fluid passes from duct 7 to duct 5.

Now if the pressure of the fluid within duct 5 is higher than the pressure within duct 7, as illustrated Figure 3, then the shoulder 13 of the bushing 16 firmely abuts against the thrust 14 in the bore. This difference of pressures is directly applied to the two surfaces of the piston 21 which moves downwardly (in the Figure) against the spring force applied to it via the stem 18 and the ring 15. This results in an opening of the valve, and the two ducts 5 and 7 communicate in order to allow a fluid flow from duct 5 to duct 7.

It must be noted that the movement of the piston 21 and the movement of the bushing 16 in both cases are made against the same spring force which can be readily adjusted by turning the screw-head 24. By appropriately choosing the active surfaces of this relief valve, this last may be easily rendered symmetric. In this case, the relative axial translation length -h- between the piston 21 and the bushing 16 is identical for a given difference of fluid pressures within the ducts, whatever is the sign of this difference.

## Claims

1. A two-way operating relief valve comprising a body (11) having a blind bore (9) with which first and second ducts (5,7) communicate, a piston (21) constituting a valve member closing the communication between the ducts (5,7) at rest, the piston (21) being provided with a stem (18) sliding within a bushing (16) which is slidably arranged within the bore (9), an end of the bushing (16) being able to cooperate with a thrust (14) provided in the bore (9), and a part of the bushing (16) constituting a seat for the valve member, a helicoïdal spring (17) pushing apart the piston (21) and the bushing (16) so that the pressure provided via the first duct (5) is applied to one surface of the piston (21) and to a shoulder (13) provided at the bushing (16) for opening communication between the first and second duct (5 and 7) and the pressure provided via the second duct (7) is applied to the other surface of the piston (21) and to an end of the bushing (16) for opening communication between the second and first duct (7 and 5), on the end of the stem (18) opposite the piston (21) being screwed a ring (15) between which and the shoulder (13) of the bushing (16) is disposed the helicoïdal spring (17), the thrust (14) provided in the bore (9) being defined by the junction of two bore portions of different diameters, the bushing (16) sliding within one of the bore portions, the helicoïdal spring (17) being located within the bore portion of greater diameter,
**characterized in that**
the one end of the bushing (16) is formed by the shoulder which cooperates on its one side with the thrust (14) and on its other side with the helicoïdal spring (17), the latter urges at rest the ring (15) in abutment against the end of the blind bore (9), the other end of the bushing (16) constitutes the seat for the valve member, and the bushing (16) slides within the bore portion of smaller diameter.

2. The two-way operating relief valve of claim 1, characterized in that said ring (15) provides an adjusting means together with a screw-head (24) provided at said end of said stem (18), said ring (15) is arranged such not to rotate within said blind bore (9).

## Patentansprüche

1. Zweiwegüberdruckventil mit einem Gehäuse (11), das eine Sackbohrung (9) aufweist, mit der ein erster und zweiter Kanal (5, 7) in Verbindung stehen, einem ein Ventilelement bildenden Kolben (21), der die Verbindung zwischen den Kanälen (5, 7) in Ruhelage schließt und mit einem Schaft (18) versehen ist, der innerhalb einer Buchse (16) gleitet, die gleitend in der Bohrung (9) angeordnet ist, wobei ein Ende der Buchse (16) mit einem Drucklager (14) zusammenwirken kann, das in der Bohrung (9) vorgesehen ist, und ein Teil der Buchse (16) einen Sitz für das Ventilelement bildet, und einer schraubenförmigen Feder (17), die den Kolben (21) und die Buchse (16) voneinander weg drückt, so daß über den ersten Kanal (5) zugeführter Druck eine Fläche des Kolbens (21) und eine an der Buchse (16) vorgesehene Schulter (13) beaufschlagt, um die Verbindung zwischen dem ersten und zweiten Kanal (5 und 7) zu öffnen, und der über den zweiten Kanal (7) zugeführte Druck die andere Fläche des Kolbens (21) und ein Ende der Buchse (16) beaufschlagt, um die Verbindung zwischen dem zweiten und ersten Kanal (7 und 5) zu öffnen, wobei auf das entgegengesetzt zum Kolben (21) angeordnete Ende des Schaftes (18) ein Ring (15) geschraubt ist, zwischen dem und der Schulter (13) der Buchse (16) die schraubenförmige Feder (17) angeordnet ist, das in der Bohrung (9) vorgesehene Drucklager (14) durch die Verbindung zweier Bohrungsabschnitte unterschiedlicher Durchmesser gebildet ist, die Buchse (16) innerhalb einer der Bohrungsabschnitte gleitet und die schraubenförmige Feder (17) in dem Bohrungsabschnitt mit größerem Durchmesser angeordnet ist,
dadurch gekennzeichnet, daß
das eine Ende der Buchse (16) durch die Schulter gebildet ist, die auf ihrer einen Seite mit dem Drucklager (14) und auf ihrer anderen Seite mit der schraubenförmigen Feder (17) zusammenwirkt, die schraubenförmige Feder (17) in Ruhelage den Ring (15) gegen das Ende der Sackbohrung (9) drückt, das andere Ende der Buchse (16) den Sitz für das Ventilelement bildet und die Buchse (16) innerhalb des Bohrungsabschnittes mit kleinerem Durchmesser gleitet.

2. Zweiwegüberdruckventil nach Anspruch 1, dadurch gekennzeichnet, daß der Ring (15) zusammen mit einem Schraubenkopf (24), der an dem Ende des Schaftes (18) vorgesehen ist, eine Justiereinrichtung bildet und daß der Ring (15) so angeordnet ist, daß er sich innerhalb der Sackbohrung (9) nicht dreht.

## Revendications

1. Valve de surpression bidirectionnelle comprenant un corps (11) à alésage borgne (9) avec lequel communiquent un premier et un second conduits (5,7 ) , un piston (21) constituant clapet fermant la communication entre les conduits (5, 7) au repos, le piston (21) étant équipé d'une tige (18) coulissant dans une douille (16 ) qui elle-même coulisse dans l'alésage (9), une extrémité de la douille (16) pouvant agir conjointement avec une butée (14) prévue dans l'alésage (9), et une partie de la douille (16) constituant le siège du clapet de valve, un ressort hélicoïdal (17) écartant le piston (21) et la douille (16) de telle manière que la pression délivrée par le premier conduit (5) soit appliquée sur une face du piston (21) et sur un épaulement (13) prévu sur la douille (16) pour ouvrir la communication entre le premier et le second conduits (5 et 7) et que la pression fournie par le second conduit (7) soit appliquée à l'autre face du piston (21) et à une extrémité de la douille (16) pour ouvrir la communication entre les second et premier conduits (7 et 5) , à l'extrémité de la tige (18) opposée au piston (21) une bague (15)étant vissée tandis qu'un ressort hélicoïdal (17) est interposé entre la bague et l'épaulement (13) de la douille (16), la butée (14) prévue dans l'alésage (9) étant définie par la jonction de deux parties de l'alésage de diamètres différents, la douille (16) coulissant à l'intérieur d'une des parties de l'alésage, le ressort hélicoïdal (17) étant situé à l'intérieur de la partie de l'alésage de plus grand diamètre, caractérisée en ce que l'extrémité de la douille (16) est formée par l'épaulement qui agit conjointement sur l'une de ses faces avec la butée (14) et sur son autre face avec le ressort hélicoïdal(17) , que ce dernier repousse au repos la bague (15) en butée contre l'extrémité de l'alésage borgne (9), l'autre extrémité de la douille (16) constitue un siège pour le clapet ,et la douille (16) coulisse à l'intérieur de la partie d'alésage de petit diamètre.

2. Valve de surpression bidirectionnelle selon la revendication 1, caractérisée en ce que la bague (15) fournit un moyen dé réglage avec une tête de vis (24) prévue à l'extrémité de la tige (18) et que la bague (15) est disposée de manière à ne pas tourner à l'intérieur de l'alésage borgne (9).
